# EUROPÄISCHE PATENTSCHRIFT

(11) **EP 1 736 909 B1**
(45) Veröffentlichungstag und Bekanntmachung des Hinweises auf die Patenterteilung: **07.05.2008**
(21) Anmeldenummer: 05013525.0
(22) Anmeldetag: 23.06.2005
(51) Int. Cl.: G06K 7/00

(54) **Kartenleser mit doppel-U-förmig angeordneten Kontaktfedern**
Cardreader with dual U-shaped spring contacts
Lecteur de cartes avec des lames de contact à ressort en forme de double U

(43) Veröffentlichungstag der Anmeldung: 27.12.2006
(73) Patentinhaber: ddm hopt + schuler GmbH & Co. KG., 78628 Rottweil (DE)
(72) Erfinder: Hopt, Karl-Rudolf, 78628 Rottweil (DE); Hopt, Jürgen, 78628 Rottweil (DE)
(74) Vertreter: Kohler Schmid Möbus

(56) Entgegenhaltungen:
- EP-A- 0 803 835
- WO-A-20/04068391
- US-A1- 2003 166 354

## Beschreibung

Die vorliegende Erfindung betrifft einen Kartenleser mit zwei Reihen von elektrischen Kontakten in Form von elastisch verformbaren Kontaktfedern zum Kontaktieren der elektrischen Kontaktfelder einer in den Kartenleser eingeführten Karte, wobei sich die Kontaktfedern parallel zur Karteneinführrichtung erstrecken und wobei jede Kontaktfeder einstückig einen in die Kartenbahn ragenden Kontaktabschnitt für den Kontakt mit einem der Kontaktfelder der Karte, einen Anschlussabschnitt zum Anschließen an eine Schreib-/Lesevorrichtung, einen dazwischen liegenden U-förmigen Verbindungsabschnitt sowie einen Befestigungsabschnitt zum Befestigen der Kontaktfeder am Kontaktträger aufweist.

Ein derartiger Kartenleser ist beispielsweise durch die Dokumente US 2003/166354 A1 und EP 0 803 835 A2 bekannt geworden.

Bei diesem bekannten Kartenleser sind die Kontaktfedern der beiden Kontaktreihen mit ihren U-förmigen Verbindungsabschnitten einander zugewandt angeordnet. Beim Einführen einer Karte in den Kartenleser werden die Kontaktfedern der in Karteneinführrichtung hinteren Kontaktreihe, auf die die Karte beim Einführen zuerst trifft, aus der Kartenbahn ausgelenkt und dabei, da der Drehpunkt der Kontaktfedern in Karteneinführrichtung vor dem Angriffspunkt der Karte liegt, auch gestaucht. Hingegen werden die Kontaktfedern der in Karteneinführrichtung vorderen Kontaktreihe, wenn sie durch die Karte ausgelenkt werden, nicht gestaucht, da hier der Drehpunkt der Kontaktfedern in Karteneinführrichtung hinter dem Angriffspunkt der Karte liegt. Die Kontaktkräfte und Federbelastung der Kontaktfedern sind somit aufgrund der Stauchung der hinteren Kontaktfedern bei beiden Kontaktreihen unterschiedlich.

Aufgabe der vorliegenden Erfindung ist es demgegenüber, einen Kartenleser der eingangs genannten Art dahingehend weiterzubilden, dass die Kontaktkräfte und Federbelastung der Kontaktfedern bei beiden Kontaktreihen gleich ist.

Diese Aufgabe wird erfindungsgemäß durch die Vorrichtung mit den Merkmalen des Anspruchs 1 gelöst.

Durch diese doppel-C-förmige Anordnung der Kontaktfedern, bei der die freien Enden aller Kontaktabschnitte in Karteneinführrichtung gerichtet sind, liegt bei beiden Kontaktreihen der Drehpunkt der Kontaktfedern in Karteneinführrichtung hinter dem Angriffspunkt der Karte. Die Kontaktabschnitte der Kontaktfedern der beiden Kontaktreihen werden durch Einführen einer Karte nicht gestaucht, sondern nur federelastisch ausgelenkt.

Der Platzbedarf der Kontaktfedern in Querrichtung ist minimiert, wenn der Kontaktabschnitt, der U-förmige Verbindungsabschnitt, der Befestigungsabschnitt und vorzugsweise auch der Anschlussabschnitt symmetrisch zur Mittelebene der Kontaktfeder sind.

In einer ersten besonders bevorzugten Ausführungsform ist zumindest bei einer Kontaktreihe der U-förmige Verbindungsabschnitt der Kontaktfedern durch zwei voneinander querbeabstandete parallele U-förmige Arme gebildet, die vom Befestigungsabschnitt entgegen der Karteneinführrichtung abgehen, während der Anschlussabschnitt am Befestigungsabschnitt zwischen den beiden U-förmigen Armen entgegen der Karteneinführrichtung abgeht. Vorzugsweise ist der Befestigungsabschnitt der Kontaktfeder rahmenförmig ausgebildet und liegt der Kontaktabschnitt der Kontaktfeder in der Rahmenöffnung. Bevorzugt erstreckt sich weiterhin der Befestigungsabschnitt der Kontaktfeder bis zu einem zwischen beiden Kontaktreihen vorgesehenen Mittelsteg des Kontaktträgers.

In einer anderen bevorzugten Ausführungsform ist zumindest bei einer Kontaktreihe der U-förmige Verbindungsabschnitt der Kontaktfedern durch einen einzigen U-förmigen Arm gebildet. Vorzugsweise ist der Befestigungsabschnitt rahmenförmig ausgebildet und liegt der Kontaktabschnitt der Kontaktfeder in der Rahmenöffnung. Bevorzugt erstreckt sich weiterhin der Befestigungsabschnitt der Kontaktfeder bis zu einem in Karteneinführrichtung vor der Kontaktreihe vorgesehenen Quersteg des Kontaktträgers.

Vorzugsweise sind die Anschlussabschnitte der beiden Kontaktreihen einander abgewandt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

### Es zeigt:

- Fig. 1: den erfindungsgemäßen Kartenleser mit doppel-C-förmig angeordneten Kontaktfedern im Längsschnitt;
- Fig. 2: eine Draufsicht auf den erfindungsgemäßen Kartenleser im Bereich der Kontaktfedern; und
- Fign. 3 und 4: zwei unterschiedlich ausgebildete Kontaktfedern des erfindungsgemäßen Kartenlesers.

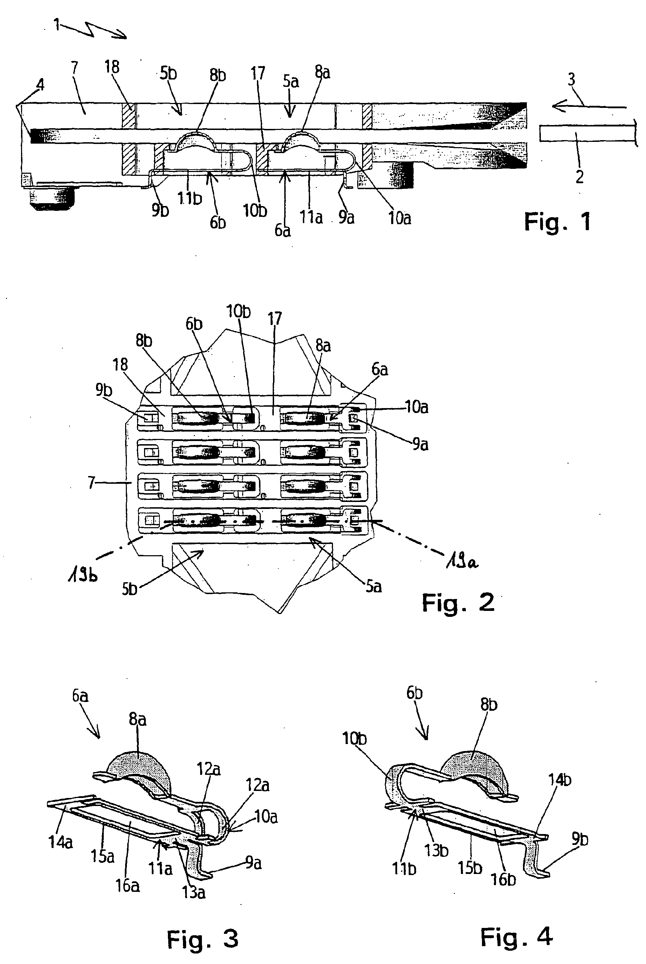

In **Fig. 1** ist mit **1** ein sogenannter Push/Pull-Kartenleser bezeichnet, bei dem eine Karte **2** durch den Benutzer in Einführrichtung **3** bis zur Anlage an einen Kartenanschlag **4** in ihre Datenaustauschposition in den Kartenleser 1 eingeführt und nach dem Datenaustausch vom Benutzer wieder aus dem Kartenleser 1 herausgezogen wird. Die Karte 2 trägt zum Speichern der Daten einen Mikrochip (nicht gezeigt), dessen Kontakte als elektrische Kontaktfelder (nicht gezeigt) auf der Kartenoberfläche vorgesehen sind.

Der Kartenleser 1 weist zwei in Karteneinführrichtung 3 hintereinander angeordnete Reihen **5a, 5b** von elektrischen Kontakten in Form von elastisch verformbaren Kontaktfedern **6a, 6b** zum Kontaktieren der elektrischen Kontaktfelder der in den Kartenleser 1 eingeführten Karte 2 auf. Die Kontaktfedern 6a, 6b erstrecken sich parallel zur Karteneinführrichtung 3 und sind am Kartenlesergehäuse **7** befestigt, das ein Kunststoffspritzteil ist.

Jede Kontaktfeder 6a, 6b weist einstückig einen in die Kartenbahn ragenden Kontaktabschnitt **8a, 8b** für den Kontakt mit einem der Kontaktfelder der Karte 2, einen Anschlussabschnitt **9a, 9b** zum Anschließen an eine Schreib-/Lesevorrichtung (nicht gezeigt) des Kartenlesers 1, einen dazwischen liegenden U-förmigen Verbindungsabschnitt **10a, 10b** sowie einen Befestigungsabschnitt **11a, 11b** zum Befestigen der Kontaktfeder 6a, 6b am Kartenlesergehäuse 7 auf. Der Kontaktabschnitt 8a, 8b ist kalottenförmig und der Anschlussabschnitt 9a, 9b als SMD-Kontakt ausgebildet.

Die Kontaktfedern 6a, 6b beider Kontaktreihen 5a, 5b sind mit ihren Kontaktabschnitten 8a, 8b und ihren U-förmigen Verbindungsabschnitten 10a, 10b gleich ausgerichtet, d.h., die freien Enden der Kontaktabschnitte 8a, 8b weisen in Karteneinführrichtung 3, also in Fig. 2 nach links, und die U-förmigen Verbindungsabschnitten 10a, 10b sind entgegen der Karteneinführrichtung 3 gerichtet, also auf der rechten Seite, vorgesehen. Mit anderen Worten sind die Kontaktfedern 6a, 6b beider Kontaktreihen 5a, 5b doppel-C-förmig angeordnet,
wobei die Anschlussabschnitte 9a, 9b der beiden Kontaktreihen 5a, 5b jeweils einander abgewandt sind. Durch diese doppel-C-förmige Anordnung der Kontaktfedern 6a, 6b, bei der die freien Enden aller Kontaktabschnitte 8a, 8b in Karteneinführrichtung 3 gerichtet sind, liegt bei beiden Kontaktreihen 5a, 5b der Drehpunkt der Kontaktfedern 6a, 6b in Karteneinführrichtung 3 hinter dem Angriffspunkt der Karte 2. Die Kontaktabschnitte 8a, 8b der Kontaktfedern 6a, 6b der beiden Kontaktreihen 5a, 5b werden durch Einführen der Karte 2 nicht gestaucht, sondern nur federelastisch ausgelenkt.

Wie **Fig. 2** zeigt, liegen der Kontaktabschnitt 8a, 8b, der Anschlussabschnitt 9a, 9b und der U-förmige Verbindungsabschnitt 10a, 10b jeder Kontaktfeder 6a, 6b jeweils in der gleichen rechtwinklig zur Kartenbahn und zur Karteneinführrichtung 3 verlaufenden Ebene. Dabei liegen jeweils die Kontakt-, Anschluss- und Verbindungsabschnitte 8a, 9a, 10a einer Kontaktfeder 6a der einen Kontaktreihe 5a und die Kontakt-, Anschluss- und Verbindungsabschnitte 8b, 9b, 10b einer Kontaktfeder 6b der anderen Kontaktreihe 5b in der gleichen Ebene.

Wie in **Fig. 3** gezeigt, ist bei den Kontaktfedern 6a der in Karteneinführrichtung 3 hinteren Kontaktreihe 5a der U-förmige Verbindungsabschnitt 10a durch zwei voneinander querbeabstandete parallele U-förmige Arme **12a** gebildet, die von einem Quersteg **13a** des Befestigungsabschnitts 11a entgegen der Karteneinführrichtung 3 abgehen. Von diesem Quersteg 13a geht zwischen den beiden Armen 12a auch der Anschlussabschnitt 9a entgegen der Karteneinführrichtung 3 ab, d.h., der Anschlussabschnitt 9a ist an der Kontaktfeder 6a auf der Seite des U-förmigen Verbindungsabschnitts 10a vorgesehen. Der Befestigungsabschnitt 11 a ist rahmenförmig ausgebildet und umfasst neben dem Quersteg 13a noch den Quersteg **14a** und die beiden Seitenschenkel **15a,** wobei der Kontaktabschnitt 8a oberhalb der Rahmenöffnung **16a** liegt bzw. in der Draufsicht der Fig. 2 innerhalb der Rahmenöffnung 16a liegt. Der Befestigungsabschnitt 11a, der sich mit seinem Quersteg 14a bis zu einem zwischen beiden Kontaktreihen 5a, 5b vorgesehenen Mittelsteg **17** (Fig. 2) des Kartenlesergehäuses 7 erstreckt, ist beim Herstellen des Kartenlesergehäuses 7 ein Einlegeteil, das vollständig von Kunststoff umspritzt ist. Der Kontaktabschnitt 8a, der Anschlusskontakt 9a, der U-förmige Verbindungsabschnitt 10a und der Befestigungsabschnitt 11a sind symmetrisch zur Mittelebene der Kontaktfeder 6a, so dass in der Kontaktfeder 6a keine Querkräfte auftreten können und die Querabmessung der Kontaktfeder 6a minimiert ist.

Wie in **Fig. 4** gezeigt, ist bei den Kontaktfedern 6b der in Karteneinführrichtung 3 vorderen Kontaktreihe 5b der U-förmige Verbindungsabschnitt 10b durch einen einzigen U-förmigen Arm gebildet. Der Befestigungsabschnitt 11 b ist rahmenförmig mit den beiden Quersteg **13b, 14b** und den beiden Seitenschenkeln **15b** ausgebildet,
wobei der Kontaktabschnitt 8b oberhalb der Rahmenöffnung **16b** liegt bzw. in der Draufsicht der Fig. 2 innerhalb der Rahmenöffnung 16b liegt. Der U-förmige Verbindungsabschnitt 10b geht vom Quersteg 13b des Befestigungsabschnitts 11 b entgegen der Karteneinführrichtung 3 ab, während der Anschlussabschnitt 9b in Karteneinführrichtung 3 vom Quersteg 14b abgeht, also an der Kontaktfeder 6b auf der anderen Seite des U-förmigen Verbindungsabschnitts 10b vorgesehen ist. Der Befestigungsabschnitt 11 b, der sich mit seinem Quersteg 14b bis zu einem weiteren Quersteg **18** des Kartenlesergehäuses 7 erstreckt, ist beim Herstellen des Kartenlesergehäuses 7 ein Einlegeteil, das vollständig von Kunststoff umspritzt ist. Der Kontaktabschnitt 8b, der Anschlusskontakt 9b, der U-förmige Verbindungsabschnitt 10b und der Befestigungsabschnitt 11 b sind symmetrisch zur Mittelebene der Kontaktfeder 6b, so dass in der Kontaktfeder 6b keine Querkräfte auftreten können und die Querabmessung der Kontaktfeder 6b minimiert ist.

## Patentansprüche

1. Kartenleser (1) mit zwei Reihen (5a, 5b) von elektrischen Kontakten in Form von elastisch verformbaren Kontaktfedern (6a, 6b) zum Kontaktieren der elektrischen Kontaktfelder einer in den Kartenleser (1) eingeführten Karte (2), wobei sich die Kontaktfedern (6a, 6b) parallel zur Karteneinführrichtung (3) erstrecken und wobei jede Kontaktfeder (6a, 6b) einstückig einen in die Kartenbahn ragenden Kontaktabschnitt (8a, 8b) für den Kontakt mit einem der Kontaktfelder der Karte (2), einen Anschlussabschnitt (9a, 9b) zum Anschließen an eine Schreib-/Lesevorrichtung, einen dazwischen liegenden U-förmigen Verbindungsabschnitt (10a, 10b) sowie einen Befestigungsabschnitt (11a, 11b) zum Befestigen der Kontaktfeder (6a, 6b) am Kartenlesergehäuse (7) aufweist,
**dadurch gekennzeichnet,**
**dass** die U-förmigen Verbindungsabschnitte (10a, 10b) der Kontaktfedern (6a, 6b) beider Kontaktreihen (5a, 5b) entgegen der Karteneinführrichtung (3) gerichtet sind.

2. Kartenleser nach Anspruch 1, **dadurch gekennzeichnet, dass** der Kontaktabschnitt (8a, 8b), der U-förmige Verbindungsabschnitt (10a, 10b) und der Befestigungsabschnitt (11a, 11b) spiegelsymmetrisch zur Mittelebene (19a, 19b) der Kontaktfeder (6a, 6b) sind.

3. Kartenleser nach Anspruch 2, **dadurch gekennzeichnet, dass** auch der Anschlussabschnitt (9a, 9b) symmetrisch zur Mittelebene (19a, 19b) der Kontaktfeder (6a, 6b) ist.

4. Kartenleser nach einem der vorhergehenden Ansprüche, **dadurch gekennzeichnet, dass** zumindest bei einer Kontaktreihe (5a) der U-förmige Verbindungsabschnitt (10a) der Kontaktfedern (6a) durch zwei voneinander querbeabstandete parallele U-förmige Arme (12a) gebildet ist, die vom Befestigungsabschnitt (11a) entgegen der Karteneinführrichtung (3) abgehen, und dass der Anschlussabschnitt (9a) am Befestigungsabschnitt (11 a) zwischen den beiden U-förmigen Armen (12a) entgegen der Karteneinführrichtung (3) abgeht.

5. Kartenleser nach Anspruch 4, **dadurch gekennzeichnet, dass** der Befestigungsabschnitt (11a) der Kontaktfeder (6a) rahmenförmig ausgebildet ist und der Kontaktabschnitt (8a) der Kontaktfeder (6a) in der Rahmenöffnung (16a) liegt.

6. Kartenleser nach Anspruch 4 oder 5, **dadurch gekennzeichnet, dass** sich der Befestigungsabschnitt (11a) der Kontaktfeder (6a) bis zu einem zwischen beiden Kontaktreihen (5a, 5b) vorgesehenen Mittelsteg (17) des Kartenlesergehäuses (7) erstreckt.

7. Kartenleser nach einem der vorhergehenden Ansprüche, **dadurch gekennzeichnet, dass** zumindest bei einer Kontaktreihe (5b) der U-förmige Verbindungsabschnitt (10b) der Kontaktfedern (6b) durch einen einzigen U-förmigen Arm gebildet ist.

8. Kartenleser nach Anspruch 7, **dadurch gekennzeichnet, dass** der Befestigungsabschnitt (11b) rahmenförmig ausgebildet ist und der Kontaktabschnitt (8b) der Kontaktfeder (6b) in der Rahmenöffnung (16b) liegt.

9. Kartenleser nach Anspruch 7 oder 8, **dadurch gekennzeichnet, dass** sich der Befestigungsabschnitt (11b) der Kontaktfeder (6b) bis zu einem in Karteneinführrichtung (3) vor der Kontaktreihe (5b) vorgesehenen Quersteg (18) des Kartenlesergehäuses (7) erstreckt.

10. Kartenleser nach einem der vorhergehenden Ansprüche, **dadurch gekennzeichnet, dass** die Anschlussabschnitte (9a, 9b) der beiden Kontaktreihen (5a, 5b) einander abgewandt sind.

11. Kartenleser nach einem der vorhergehenden Ansprüche, **dadurch gekennzeichnet, dass** die Anschlussabschnitte (9a, 9b) der beiden Kontaktreihen (5a, 5b) SMD-Kontakte sind.

## Claims

1. Card reader (1) comprising two rows (5a, 5b) of electric contacts in the form of elastically deformable contact springs (6a, 6b) for contacting the electric contact fields of a card (2) inserted into the card reader (1), wherein the contact springs (6a, 6b) extend parallel to the card insertion direction (3) and wherein each contact spring (6a, 6b) comprises a contact section (8a, 8b) projecting into the card path for contacting one of the contact fields of the card (2), a connecting section (9a, 9b) for connecting to a write/read device, an intermediate U-shaped joining section (10a, 10b) and a mounting section (11a, 11b) for mounting the contact spring (6a, 6b) to the card reader housing (7), all being formed in one piece with the contact spring (6a, 6b), **characterized in that** the U-shaped joining sections (10a, 10b) of the contact springs (6a, 6b) of both contact rows (5a, 5b) are oriented in a direction opposite to the card insertion direction (3).

2. Card reader according to claim 1, **characterized in that** the contact section (8a, 8b), the U-shaped joining section (10a, 10b) and the mounting section (11a, 11b) are mirror-symmetrical relative to the center plane (19a, 19b) of the contact spring (6a, 6b).

3. Card reader according to claim 2, **characterized in that** the connecting section (9a, 9b) is also mirror-symmetrical relative to the center plane (19a ,19b) of the contact spring (6a, 6b).

4. Card reader according to any one of the preceding claims, **characterized in that** the U-shaped joining section (10a) of the contact springs (6a) of at least one contact row (5a) is formed by two parallel U-shaped arms (12a) which are spaced apart in a transverse direction and extend from the mounting section (11a) in a direction opposite to the card insertion direction (3), and the connecting section (9a) extends from the mounting section (11a) between the two U-shaped arms (12a) in a direction opposite to the card insertion direction (3).

5. Card reader according to claim 4, **characterized in that** the mounting section (11a) of the contact spring (6a) has the shape of a frame and the contact section (8a) of the contact spring (6a) is in the frame opening (16a).

6. Card reader according to claim 4 or 5, **characterized in that** the mounting section (11a) of the contact spring (6a) extends to a central web (17) of the card reader housing (7) provided between the two contact rows (5a, 5b).

7. Card reader according to any one of the preceding claims, **characterized in that** the U-shaped joining section (10b) of the contact springs (6b) of at least one contact row (5b) is formed by one single U-shaped arm.

8. Card reader according to claim 7, **characterized in that** the mounting section (11b) has the shape of a frame and the contact section (8b) of the contact spring (6b) is in the frame opening (16b).

9. Card reader according to claim 7 or 8, **characterized in that** the mounting section (11b) of the contact spring (6b) extends to a transverse web (18) of the card reader housing (7) provided in front of the contact row (5b), as viewed in the card insertion direction (3).

10. Card reader according to any one of the preceding claims, **characterized in that** the connecting sections (9a, 9b) of the two contact rows (5a, 5b) face away from each other.

11. Card reader according to any one of the preceding claims, **characterized in that** the connecting sections (9a, 9b) of the two contact rows (5a, 5b) are SMD contacts.

## Revendications

1. Lecteur de cartes (1) comportant deux rangées (5a, 5b) de contacts électriques sous la forme de ressorts de contact déformables élastiquement (6a, 6b) pour venir en contact des zones de contacts électriques d'une carte (2) insérée dans un lecteur de cartes (1), dans lequel les ressorts de contact (6a, 6b) s'étendent parallèlement à la direction d'insertion de carte (3) et dans lequel chaque ressort de contact (6a, 6b) présente d'une seule pièce un tronçon de contact (8a, 8b) faisant saillie dans le trajet de carte pour le contact avec l'une des zones de contact de la carte (2), un tronçon de connexion (9a, 9b) pour une connexion à un dispositif d'écriture/lecture, un tronçon de liaison en forme de U (10a, 10b) se trouvant entre eux ainsi qu'un tronçon de fixation (11a, 11b) pour une fixation des ressorts de contact (6a, 6b) dans le boîtier du lecteur de cartes (7),
**caractérisé en ce que**
les tronçons de liaison en forme de U (10a, 10b) des ressorts de contact (6a, 6b) des deux rangées de contacts (5a, 5b) sont orientés à l'opposé de la direction d'insertion de carte (3).

2. Lecteur de cartes selon la revendication 1, **caractérisé en ce que** le tronçon de contact (8a, 8b), le tronçon de liaison en forme de U (10a, 10b) et le tronçon de fixation (11a, 11b) sont symétriques par rapport au plan médian (19a, 19b) des ressorts de contact (6a, 6b).

3. Lecteur de cartes selon la revendication 2, **caractérisé en ce que** le tronçon de connexion (9a, 9b) est symétrique par rapport au plan médian (19a, 19b) des ressorts de contact (6a, 6b).

4. Lecteur de cartes selon l'une des revendications précédentes, **caractérisé en ce qu'**au moins, dans le cas d'une rangée de contacts (5a), le tronçon de liaison en forme de U (10a) des ressorts de contact (6a) est formé par deux bras en forme de U (12a) parallèles écartés transversalement l'un de l'autre, qui partent du tronçon de fixation (11a) à l'opposé de la direction d'insertion de cartes (3), et **en ce que** le tronçon de connexion (9a) fait saillie dans le tronçon de fixation (11a) entre les deux bras en forme de U (12a) à l'opposé de la direction d'insertion de cartes (3).

5. Lecteur de cartes selon la revendication 4, **caractérisé en ce que** le tronçon de fixation (11a) des ressorts de contact (6a) est réalisé sous la forme d'un cadre et le tronçon de contact (8a) des ressorts de contact (6a) se trouve dans l'ouverture de cadre (16a).

6. Lecteur de cartes selon la revendication 4 ou 5, **caractérisé en ce que** le tronçon de fixation (11a) des ressorts de contact (6a) s'étend jusqu'à une entretoise médiane (17) du boîtier de lecteur de cartes (7) prévue entre les deux rangées de contacts (5a, 5b).

7. Lecteur de cartes selon l'une des revendications précédentes, **caractérisé en ce qu'**au moins dans le cas d'une rangée de contacts (5b), le tronçon de liaison en forme de U (10b) des ressorts de contact (6b) est réalisé par un unique bras en forme de U.

8. Lecteur de cartes selon la revendication 7, **caractérisé en ce que** le tronçon de fixation (11b) est réalisé sous la forme d'un cadre et le tronçon de contact (8b) des ressorts de contact (6b) se trouve dans l'ouverture de cadre (16b).

9. Lecteur de cartes selon la revendication 7 ou 8, **caractérisé en ce que** le tronçon de fixation (11b) des ressorts de contact (6b) s'étend jusqu'à une entretoise transversale (18) du boîtier de lecteur de cartes (7) prévue dans la direction d'insertion de cartes (3) avant la rangée de contacts (5b).

10. Lecteur de cartes selon l'une des revendications précédentes, **caractérisé en ce que** les tronçons de connexion (9a, 9b) des deux rangées de contacts (5a, 5b) sont opposés les uns aux autres.

11. Lecteur de cartes selon l'une des revendications précédentes, **caractérisé en ce que** les tronçons de connexion (9a, 9b) des deux rangées de contacts (5a, 5b) sont des contacts CMS.
